# EUROPÄISCHE PATENTSCHRIFT

(11) **EP 3 599 074 B1**
(45) Veröffentlichungstag und Bekanntmachung des Hinweises auf die Patenterteilung: **07.06.2023**
(21) Anmeldenummer: 19188547.4
(22) Anmeldetag: 26.07.2019
(51) Int. Cl.: B29C 53/36, B31B 70/10, B65D 75/00

(54) **VORRICHTUNG ZUR HERSTELLUNG VON STANDBODENBEUTELN**
DEVICE FOR PRODUCING STANDING BAGS
DISPOSITIF DE FABRICATION DE SACHETS À FOND PLAT

(30) Priorität: 27.07.2018 DE 202018104356 U
(43) Veröffentlichungstag der Anmeldung: 29.01.2020
(73) Patentinhaber: SN Maschinenbau GmbH, 51688 Wipperführth (DE)
(72) Erfinder: Beinghaus, Jürgen, 51688 Wipperfürth (DE)
(74) Vertreter: Angerhausen, Christoph

(56) Entgegenhaltungen:
- GB-A- 751 339
- JP-A- S58 102 747
- US-A- 3 550 935
- US-A- 3 994 209
- US-A1- 2004 025 476

## Beschreibung

Die Erfindung betrifft eine Vorrichtung zur Herstellung von Standbodenbeuteln, die einen Folienvorschub aufweist, mit der eine Folie einem Stanzsystem, einer Falteinheit und einer Siegelstation zugeführt ist, wobei die Folie kontinuierlich, insbesondere beschleunigungsfrei von dem Folienvorschub transportiert ist. Eine entsprechende Vorrichtung ist aus der US 2004/0025476 A1 bekannt. Eine weitere Vorrichtung zur Herstellung von Plasktiktüten ist aus der US 3 994 209 A bekannt.

Die DE 20 2016 104 542 U1 beschreibt einen entsprechenden Standbodenbeutel. Aus der EP 3 127 823 B1 ist ein Verfahren zum Füllen und Verschweißen von Standbodenbeuteln bekannt. Bei der Herstellung von Standbodenbeuteln ist es erforderlich, zwei Löcher in die Folienbahn einzubringen, wonach die äußeren Folien der zu einem W gefalteten Folie miteinander verschweißt werden. Die aus dem Stand der Technik bekannten Vorrichtungen arbeiten mit einem intermittierenden Folienabzug, wobei die einzelnen Verfahrensschritte der Standbodenbeutelherstellung, insbesondere die Bearbeitung der Folie im Stanzsystem, in der Falteinheit und in der Siegelstation während der Stillstandphasen der intermittierend transportierten Folie durchgeführt werden.

Dies hat den Nachteil, dass die Folie aufgrund der häufigen und abrupten Beschleunigung und Abbremsung hohen Zugkräften ausgesetzt ist, was zu einem Folienstretch führen kann, mithin zu einer plastischen Verformung der Folie, wodurch die Folie unbrauchbar wird, da sie nicht mehr den mechanischen und optischen Anforderungen genügt. Des Weiteren ist die Vorrichtung zur Herstellung der Standbodenbeutel aufgrund der wirkenden Beschleunigungskräfte beim intermittierenden Folienabzug hohem Verschleiß ausgesetzt.

Es ist daher die Aufgabe der Erfindung, eine Vorrichtung zur Herstellung von Standbodenbeuteln der eingangs beschriebenen Art derart weiterzuentwickeln, dass der Folienstretch unterbleibt und die Vorrichtung im Übrigen selbst geringerem Verschleiß ausgesetzt ist.

Diese Aufgabe wird durch eine Vorrichtung mit den Merkmalen des Anspruchs 1 gelöst. Die abhängigen Ansprüche betreffen jeweils vorteilhafte Ausführungsformen der Erfindung. Demgemäß ist vorgesehen, dass das Stanzsystem mindestens eine und vorzugsweise zwei elektromagnetisch angetriebene Lochstanzen aufweist, wobei die Lochstanzen vorzugsweise gepulst angetrieben sind, wobei die mindestens eine Lochstanze dazu eingerichtet ist, mit einem ersten elektromagnetischen Impuls in Vertikalrichtung oder in Horizontalrichtung nach unten bzw. zur Seite durch die Folie hindurch in eine erste Stellung beschleunigt zu werden. Sämtliche Folienbearbeitungsschritte, insbesondere das Stanzen der Folie in dem Stanzsystem, das Falten der Folie in der Falteinheit und das Verschweißen der Folie in der Siegelstation erfolgen während des kontinuierlichen Laufs der Folie.

Die wesentlichen Funktionen einer Vorrichtung zur Herstellung von Standbodenbeuteln können das Abziehen der Folie, das Aufnehmen der Rolle, das Einbringen von Lochstanzungen, das Falten der Folie, das Synchronisieren der Schweißstationsbewegung auf die Foliengeschwindigkeit und das Verschweißen der Folie sein. Die Schweißstation kann insbesondere eine lineare Bewegung parallel zu der Folienlängsrichtung mit der Folienvorschubgeschwindigkeit ausüben.

Es können sowohl Vorrichtungen realisiert sein, bei denen die verarbeitete Folie horizontal zwischen den einzelnen Verarbeitungsstationen geführt wird und solche, bei denen die Folie vertikal zwischen den einzelnen Verarbeitungsstationen geführt wird. Grundsätzlich kann die Folie auch unter einem Winkel zwischen der Vertikalen und der Horizontalen geführt sein.

Es kann vorgesehen sein, dass die Folie als eine Folienbahn bereitgestellt ist, die mit einer konstanten Vorschubgeschwindigkeit transportiert wird. Dazu kann die Folie von dem Folienvorschub von einer Folienrolle abgewickelt werden. Analog kann die Folien als ein Folienschlauch bereitgestellt sein und dazu von einer Folienrolle abgewickelt werden.

Das Stanzsystem der Vorrichtung zur Herstellung von Standbodenbeuteln kann in Vorschubrichtung der Folie hinter der Folienrolle und vor der Falteinheit angeordnet sein.

Die Lochstanzen können gepulst angetrieben sein. Durch den elektromagnetischen Antrieb können die Lochstanzen so schnell beschleunigt werden, dass ein Stoppen der Folie nicht erforderlich ist, da die Interaktionszeit zwischen Lochstanze und Folie so gering ist, dass die Folie während des Stanzens aufgrund des sich fortsetzenden Folienvorschubs lediglich reversiblen elastischen Verformungen ausgesetzt ist.

Die Folie kann eine Kunststofffolie, beispielsweise aus Monomaterial oder Laminat sein.

In der ersten Stellung kann die Lochstanze durch die Folie hindurch ragen.

Die mindestens eine Lochstanze kann entweder dazu eingerichtet sein, mit einem zweiten elektromagnetischen Puls in Vertikalrichtung bzw. in Horizontalrichtung aus der ersten Stellung nach oben bzw. zur Seite in eine zweite Stellung beschleunigt zu werden, in welcher die mindestens eine Lochstanze aus der Folie entfernt ist, oder in der ersten Stellung eine mechanische Vorspannung aufweisen, mit der die Lochstanze in die zweite Stellung beschleunigt ist, nachdem die Lochstanze die erste Stellung erreicht hat. Die Lochstanze kann auch dazu eingerichtet sein, durch einen direkten Stoß oder einen Rückschlag aus der ersten Stellung in die zweite Stellung zurückbewegt zu werden.

Die mindestens eine Lochstanze kann dazu eingerichtet sein, unmittelbar nach dem Erreichen der ersten Stellung, insbesondere ohne in der ersten Stellung zu verweilen, in die zweite Stellung bewegt zu werden.

Die Vorrichtung kann weiterhin einen Drehgeber zur Ermittlung einer aktuellen Folienvorschubgeschwindigkeit der Folie aufweisen. Neben dem Drehgeber kann die Vorrichtung weiterhin einen ersten Druckmarkensensor zur Ermittlung der Position einer Bedruckung der Folie aufweisen, wobei in Abhängigkeit der erfassten Folienvorschubgeschwindigkeit der Folie und der erfassten Position der Bedruckung der Folie die mindestens eine Lochstanze angesteuert, insbesondere mit einem ersten elektromagnetischen Impuls in Vertikalrichtung oder Horizontalrichtung nach unten bzw. zur Seite durch die Folie hindurch in eine erste Stellung beschleunigt ist.

Die Vorrichtung kann ein Vakuumsystem mit einem Querstromgebläse aufweisen, über das in dem Stanzsystem anfallende Stanzreste abgesogen und in einem Auffangbehälter gesammelt sind.

Die Falteinheit kann eine Bahnkantensteuerung aufweisen, mit der sichergestellt ist, dass zwei Folienkanten der Folie nach einer Faltung der Folie, beispielsweise einer W-Faltung, in der Falteinheit exakt auf gleicher Höhe verlaufen. Im Bereich der Faltung können zwei Stanzlöcher mit identischem Öffnungsquerschnitt genau übereinander angeordnet sein.

Die Falteinheit kann einen Faltkeil aufweisen, wie er grundsätzlich von horizontalen Beutelmaschinen bekannt ist, mit Hilfe welches eine zu stanzende W-Faltung erzeugt werden kann. Insbesondere bei Vorrichtungen mit vertikaler Folienführung, etwa bei vertikalen Schlauchbeutelmaschinen, kann anstelle des Faltkeils eine sogenannte Formschulter als die Falteinheit oder als ein Bestandteil der Falteinheit verwendet werden.

Die Siegelstation kann mindestens ein Siegelwerkzeug und ein Antriebssystem, insbesondere ein servomotorisches Antriebssystem aufweisen, mit dem das Siegelwerkzeug in Folienvorschubrichtung mit der Vorschubgeschwindigkeit der Folie bewegt ist. Die Siegelstation kann dadurch für eine definierte Zeit und/oder Strecke synchron zu der Folie bewegt sein. Während dieser Zeit bzw. entlang dieser Strecke kann die Folie von dem Siegelwerkzeug bearbeitet werden, ohne dass die Folie abgebremst werden muss.

Die Vorrichtung kann weiterhin einen Drehgeber und einen Druckmarkensensor aufweisen, über die die Folienvorschubgeschwindigkeit und die Position einer Bedruckung der Folie erfasst sind, so dass eine Siegelposition der Siegelstation passend zur Stanzlochposition gesteuert werden kann.

Weitere Einzelheiten der Erfindung werden anhand der nachstehenden Figuren erläutert. Dabei zeigt:
- Figur 1: eine bespielhafte Ausführungsform in perspektivischer Seitenansicht;
- Figur 2: die Ausführungsform gemäß Figur 1 in einer weiteren perspektivischen Seitenansicht von der gegenüberliegenden Seite.

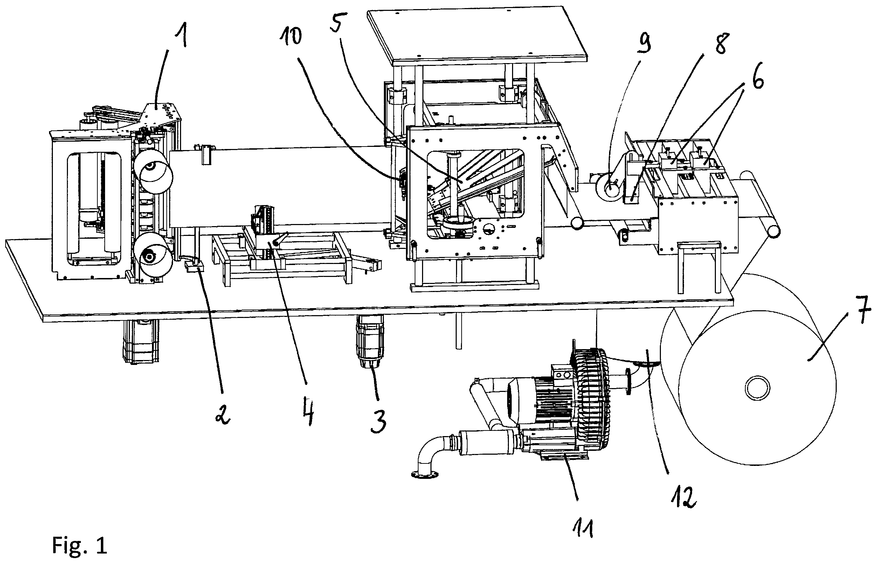

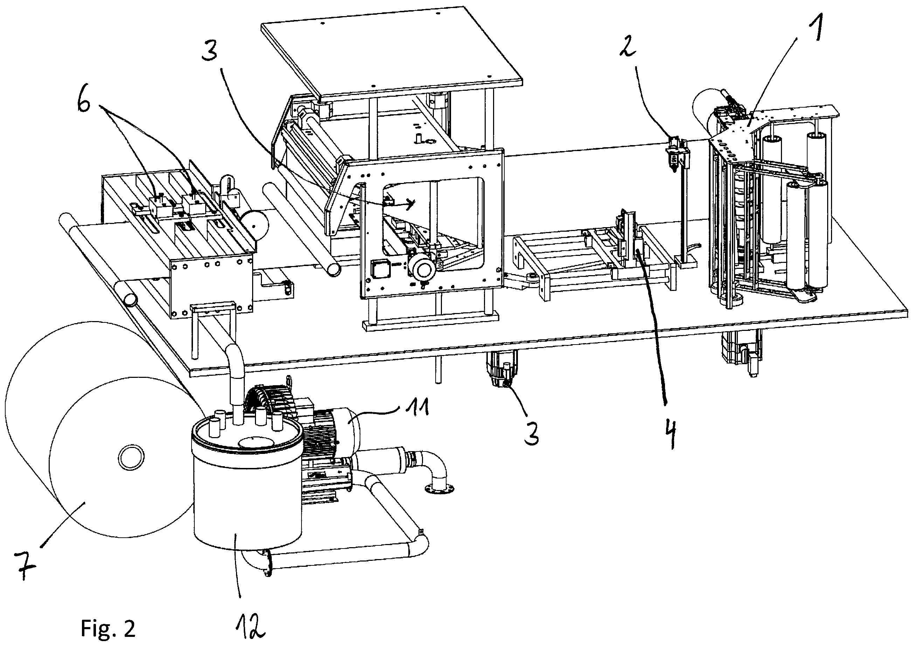

Die Figuren 1 und 2 zeigen eine beispielhafte Ausführungsform einer erfindungsgemäßen Vorrichtung zur Herstellung von Standbodenbeuteln. Dabei wird die Folie 13 über einen kontinuierlich laufenden Folienvorschub 1 von einer Folienrolle 7 abgewickelt. Ein zwischen der Folienrolle 7 und dem Faltsystem 5 fest installiertes Stanzsystem 6 stanzt mittels zwei durch elektromagnetischen Impuls angetriebener Lochstanzen zwei Löcher in die Folienbahn 13. Durch den elektromagnetischen Antrieb werden die Lochstanzen so schnell beschleunigt, dass ein Stoppen der Folienbahn für den Stanzvorgang aufgrund der geringen Interaktionszeit der Stanzen mit der Folie 13 nicht erforderlich ist.

Anders als bei den aus dem Stand der Technik bekannten Vorrichtungen, bei denen die Folienbahn 13 intermittierend zwischen den einzelnen Bearbeitungsstationen der Vorrichtung transportiert und dazu intermittierend beschleunigt und wieder abgebremst wird, können bei der erfindungsgemäßen Vorrichtung alle Folienbearbeitungsschritte und insbesondre auch der Stanzprozess während eines kontinuierlichen Laufs der Folie durchgeführt werden. Der kontinuierliche Folienlauf hat gegenüber dem intermittierenden Folienlauf den Vorteil, dass die Folie keinen übermäßigen mechanischen Belastungen ausgesetzt ist und somit der Folienstretch, das heißt die plastische Verformung der Folie durch das Beschleunigen der Folie, vermieden wird. Weiterhin wird der Verschleiß der Antriebselemente der Vorrichtung herabgesetzt.

Ein Drehgeber 9 ermittelt die aktuelle Folienvorschubgeschwindigkeit in Folienlängsrichtung, wobei in Kombination mit dem Signal eines Druckmarkensensors 8 die Position der in die Folie einzubringenden Stanzlöcher genau passend zu einer Bedruckung der Folie gesteuert werden kann. Anfallende Stanzreste werden über ein Vakuumsystem mit einem Querstromgebläse 11 abgesogen und in einem Auffangbehälter 12 gesammelt.

Anschließend wird die Folienbahn 13 mittels einer Falteinheit 5 zu einem W gefaltet. Eine Bahnkantensteuerung 10 sorgt dafür, dass sich gegenüber liegende Folienkanten der Folie 13 nach dem Falten exakt auf gleicher Höhe laufen, so dass gewährleistet ist, dass die beiden Stanzlöcher nach dem Falten exakt übereinander liegen.

Um die äußeren Folienabschnitte der W-Faltung im Stanzbereich verschweißen zu können, werden pneumatisch angetriebene Siegelwerkzeuge 4 mittels eines servomotorischen Antriebssystems 3 auf die Foliengeschwindigkeit beschleunigt, so dass die Siegelwerkzeuge 4 synchron, d.h mit derselben Geschwindigkeit und parallel zu der Folie 13 laufen. Auch hierbei wird über den Drehgeber 9 des Folienvorschubs 1 die Foliengeschwindigkeit ermittelt und in Kombination mit einem zweiten Druckmarkensensor 2 die Schweißposition passend zur Stanzlochposition eingestellt. Für die korrekte Versiegelung ist es erforderlich, dass die Siegelstation 4 für eine definierte Zeit beziehungsweise Wegstrecke synchron zu der Folie 13, mithin wiederum mit der Transportgeschwindigkeit der Folie 13 und parallel zu der Folie 13 verfahren wird. Diese Zeit beziehungsweise Wegstrecke kann von der Foliengeschwindigkeit und der Folienzusammensetzung abhängen und über eine Mensch-Maschine-Schnittstelle der Vorrichtung reguliert werden.

Die wesentlichen Funktionseinheiten sind der Folienvorschub 1 mit der Folienrolle 7sowie entsprechender Rollenaufnahme für die Bereitstellung der zu verarbeitenden Folienbahn 13, die Druckmarkensensoren 2, 8, der Antrieb 3 der Siegelstation 4, die Siegelstation 4, die Falteinheit 5, die insbesondere eine Faltkeileinrichtung sein kann, sowie das Stanzsystem 6.

Für die Herstellung von Standbodenbeuteln ist es in der Regel erforderlich, zwei Löcher in die Folienbahn 13 einzubringen, um anschließend die äußeren Folien der zu einem W gefalteten Folien verschweißen zu können. Die aus dem Stand der Technik bekannten Vorrichtungen arbeiten mit einem intermittierenden Folienabzug, wobei während der Stillstandphasen der Folie 13 die Bearbeitung der Folie erfolgt, insbesondere das Stanzen und das Siegeln der Folie 13. Durch den intermittierenden Antrieb der Folienbahn 13 wirken bei jedem Abzug der Folie 13 von der Folienrolle 7 hohe Zugkräfte auf die Folie, was zu dem bereits beschriebenen Folienstretch führen kann und einen erhöhten Verschleiß aller Antriebselemente und des Faltkeils der Falteinheit 5 verursacht.

Demgegenüber ist bei der in den Figuren gezeigten Ausführungsform vorgesehen, dass zur Schonung des Folienmaterials 13 sowie der Antriebselemente und des Faltkeils der Falteinheit 5 die Folie kontinuierlich von der Rolle 7 abgezogen wird. Dies hat zur Folge, dass das Stanzen und das Verschweißen während des kontinuierlichen Transports der Folie 13 erfolgen.

Während die Siegelstation 4 aufgrund ihrer zeitlich vergleichsweise langen Einwirkzeit auf die Folie für die Versiegelung der Folienkanten während des Siegelvorgangs mit der Folienbahn synchron transportiert wird, ist bei dem Stanzsystem 6 vorgesehen, dass dieses stillsteht, das heißt insbesondere nicht mit der Folienbahn 13 synchron transportiert wird. Um eine übermäßige mechanische Belastung der Folie zu verhindern, wenn die Lochstanze des Stanzsystems 6 durch die Folie 13 hindurch ragt, wobei die Folie 13 ja weiter transportiert wird, ist vorgesehen, dass die Einwirkzeit der Lochstanze auf die Folie 13 so gering gehalten wird, dass die Folie 13 bei auf die Folie 13 einwirkender Lochstanze lediglich eine reversible elastische Verformung erfährt, so dass die Folie in ihre Ursprungsform zurückfällt, wenn die Lochstanze aus der Folie 13 zurückgezogen wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Folienvorschub
- 2: zweiter Druckmarkensensor
- 3: Antriebssystem
- 4: Siegelstation
- 5: Falteinheit
- 6: Stanzsystem
- 7: Folienrolle
- 8: erster Druckmarkensensor
- 9: Drehgeber
- 10: Bahnkantensteuerung
- 11: Querstromgebläse
- 12: Auffangbehälter
- 13: Folie

## Patentansprüche

1. Vorrichtung zur Herstellung von Standbodenbeuteln, die einen Folienvorschub (1) aufweist, mit dem eine Folie (13) einem Stanzsystem (6), einer Falteinheit (5) und einer Siegelstation (4) zugeführt ist, wobei die Folie (13) kontinuierlich, insbesondere beschleunigungsfrei von dem Folienvorschub (1) transportiert ist, **dadurch gekennzeichnet, dass** das Stanzsystem (6) mindestens eine und vorzugsweise zwei elektromagnetisch angetriebene Lochstanzen aufweist, wobei die Lochstanzen vorzugsweise gepulst angetrieben sind, wobei die mindestens eine Lochstanze dazu eingerichtet ist, mit einem ersten elektromagnetischen Impuls in Vertikalrichtung oder in Horizontalrichtung nach unten bzw. zur Seite durch die Folie (13) hindurch in eine erste Stellung beschleunigt zu werden.

2. Vorrichtung nach Anspruch 1, bei der die Folie (13) eine Folienbahn ist, die mit einer konstanten Vorschubgeschwindigkeit transportiert ist.

3. Vorrichtung nach Anspruch 1 oder 2, bei der die Folie (13) von dem Folienvorschub (1) von einer Folienrolle (7) abgewickelt ist.

4. Vorrichtung nach Anspruch 3, bei der das Stanzsystem (6) in Vorschubrichtung der Folie (13) hinter der Folienrolle (7) und vor der Falteinheit (5) angeordnet ist.

5. Vorrichtung nach einem der vorangegangenen Ansprüche, bei der die mindestens eine Lochstanze entweder dazu eingerichtet ist, mit einem zweiten elektromagnetischen Impuls in Vertikalrichtung bzw. in Horizontalrichtung aus der ersten Stellung nach oben bzw. zur Seite in eine zweite Stellung beschleunigt zu werden, in welcher die mindestens eine Lochstanze aus der Folie (13) entfernt ist, oder in der ersten Stellung eine mechanische Vorspannung in die zweite Stellung aufweist, oder wobei die mindestens eine Lochstanze dazu eingerichtet ist, durch einen direkten Stoß oder einen Rückschlag aus der ersten Position in die zweite Position bewegt zu werden.

6. Vorrichtung nach einem der vorangegangenen Ansprüche, bei der die mindestens eine Lochstanze dazu eingerichtet ist, unmittelbar nach dem Erreichen der ersten Stellung, insbesondere ohne in der ersten Stellung zu verweilen, in die zweite Stellung bewegt zu werden.

7. Vorrichtung nach einem der vorangegangenen Ansprüche, die einen Drehgeber (9) zur Ermittlung einer aktuellen Folienvorschubgeschwindigkeit der Folie (13) aufweist.

8. Vorrichtung nach Anspruch 7, die weiterhin einen ersten Druckmarkensensor (8) zur Ermittlung der Position einer Bedruckung der Folie (13) aufweist, wobei in Abhängigkeit der erfassten Folienvorschubgeschwindigkeit der Folie (13) und der erfassten Position der Bedruckung der Folie (13) die mindestens eine Lochstanze angesteuert, insbesondere mit einem ersten elektromagnetischen Impuls in Vertikalrichtung nach unten durch die Folie (13) hindurch in eine unterste Stellung beschleunigt ist.

9. Vorrichtung nach einem der vorangegangenen Ansprüche, bei der die Falteinheit (5) eine Bahnkantensteuerung (10) aufweist, mit der sichergestellt ist, dass zwei Folienkanten der Folie (13) nach einer W-Faltung der Folie (13) in der Falteinheit (5) exakt auf gleicher Höhe verlaufen.

10. Vorrichtung nach Anspruch 9, bei der im Bereich der W-Faltung zwei Stanzlöcher mit identischem Öffnungsquerschnitt genau übereinander liegen.

11. Vorrichtung nach einem der vorangegangenen Ansprüche, bei der die Siegelstation (4) mindestens ein Siegelwerkzeug und ein Antriebssystem (3), insbesondere ein servomotorisches Antriebssystem aufweist, mit dem das Siegelwerkzeug in Folienvorschubrichtung mit der Vorschubgeschwindigkeit bewegt ist.

12. Vorrichtung nach Anspruch 11, bei der die Siegelstation (4) für eine definierte Zeit und/oder Strecke synchron zu der Folie (13) bewegt ist.

13. Vorrichtung nach Anspruch 11 oder 12, die einen Drehgeber (9) und einen Druckmarkensensor (2) aufweist, über die die Folienvorschubgeschwindigkeit und die Position einer Bedruckung der Folie (13) erfasst sind, so dass eine Siegelposition der Siegelstation (4) passend zur Stanzlochposition gesteuert werden kann.

## Claims

1. A device for producing stand-up pouches, which has a film feed (1) by means of which a film (13) is fed to a punching system (6), a folding unit (5) and a sealing station (4), the film (13) being transported continuously, in particular without acceleration, by the film feed (1), **characterized in that** the punching system (6) has at least one and preferably two electromagnetically driven hole punches, the hole punches preferably being driven in a pulsed manner, the at least one hole punch being adapted to be driven with a first electromagnetic pulse in the vertical direction or in the horizontal direction downwardly or sideways through the film (13) into a first position.

2. The device according to claim 1, wherein the film (13) is a film web transported at a constant feed rate.

3. The device according to claim 1 or 2, wherein the film (13) is unwound from a film roll (7) by the film feeder (1).

4. The device according to claim 3, in which the punching system (6) is arranged downstream of the film roll (7) and upstream of the folding unit (5) in the feed direction of the film (13).

5. The device according to any one of the preceding claims, wherein the at least one hole punch is either arranged to be accelerated with a second electromagnetic pulse in vertical direction or in horizontal direction, respectively, from the first position upwards or sideways, respectively, into a second position in which the at least one hole punch is removed from the film (13), or has a mechanical bias into the second position in the first position, or wherein the at least one hole punch is arranged to be moved from the first position into the second position by a direct impact or a recoil.

6. The device according to any one of the preceding claims, in which the at least one hole punch is adapted to be moved into the second position immediately after reaching the first position, in particular without remaining in the first position.

7. The device according to any one of the preceding claims, comprising a rotary encoder (9) for determining a current film feed speed of the film (13).

8. The device according to claim 7, which further comprises a first print mark sensor (8) for determining the position of a print on the film (13), wherein the at least one hole punch is controlled, in particular accelerated with a first electromagnetic pulse in the vertical direction downwards through the film (13) into a lowermost position, as a function of the detected film feed speed of the film (13) and the detected position of the print on the film (13).

9. The device according to any one of the preceding claims, in which the folding unit (5) has a web edge control (10) which ensures that two film edges of the film (13) run at exactly the same height after a W-fold of the film (13) in the folding unit (5).

10. The device according to claim 9, in which two punched holes with identical opening cross section lie exactly one above the other in the region of the W-fold.

11. The device according to one of the preceding claims, in which the sealing station (4) has at least one sealing tool and a drive system (3), in particular a servo-motor drive system, with which the sealing tool is moved in the film feed direction at the feed speed.

12. The device according to claim 11, in which the sealing station (4) is moved synchronously with the film (13) for a defined time and/or distance.

13. The device according to claim 11 or 12, comprising a rotary encoder (9) and a print mark sensor (2), via which the film feed speed and the position of a print on the film (13) are detected, so that a sealing position of the sealing station (4) can be controlled to match the punch hole position.

## Revendications

1. Dispositif pour la fabrication de sachets à fond plat, qui comprend une alimentation en film (1) avec laquelle un film (13) est introduit dans un système de poinçonnage (6), une unité de pliage (5) et une station de scellement (4), dans lequel le film (13) est transporté en continu, plus particulièrement sans accélération, par l'alimentation en film (1), **caractérisé en ce que** le système de poinçonnage (6) comprend au moins une et de préférence deux poinçonneuses entraînées de manière électromagnétique, dans lequel les poinçonneuses sont entraînées de préférence de manière pulsée, dans lequel l'au moins une poinçonneuse est conçue pour être accélérée avec une première impulsion électromagnétique dans la direction verticale ou dans la direction horizontale vers le bas ou vers le côté à travers le film (13) vers une première position.

2. Dispositif selon la revendication 1, dans lequel le film (13) est une bande de film qui est transportée avec une vitesse d'avance constante.

3. Dispositif selon la revendication 1 ou 2, dans lequel le film (13) est déroulé de l'alimentation en film (1) par un rouleau de film (7).

4. Dispositif selon la revendication 3, dans lequel le système de poinçonnage (6) est disposé, dans la direction d'avance du film (13), derrière le rouleau de film (7) et avant l'unité de pliage (5).

5. Dispositif selon l'une des revendications précédentes, dans lequel l'au moins une poinçonneuse est soit conçue pour être accélérée avec une deuxième impulsion électromagnétique dans la direction verticale ou dans la direction horizontale de la première position vers le haut ou vers le côté dans une deuxième position, dans laquelle l'au moins une poinçonneuse est éloignée du film (13), soit elle présente, dans la première position, une précontrainte mécanique vers la deuxième position, ou dans lequel l'au moins une poinçonneuse est conçue pour être déplacée, par un choc direct ou un contrecoup, de la première position vers la deuxième position.

6. Dispositif selon l'une des revendications précédentes, dans lequel l'au moins une poinçonneuse est conçue pour être déplacée vers la deuxième position directement après avoir atteint la première position, plus particulièrement sans rester dans la première position.

7. Dispositif selon l'une des revendications précédentes, qui comprend un capteur de rotation (9) permettant de déterminer une vitesse d'avance du film (13).

8. Dispositif selon la revendication 7, qui comprend en outre un capteur de marque d'impression (8) permettant de déterminer la position de l'impression du film (13), dans lequel l'au moins une poinçonneuse est contrôlée en fonction de la vitesse d'avance du film (13) et de la position de l'impression sur le film (13) mesurée, plus particulièrement elle est accélérée avec une première impulsion électromagnétique dans la direction verticale vers le bas à travers le film (13) vers une position inférieure.

9. Dispositif selon l'une des revendications précédentes, dans lequel l'unité de pliage (5) comprend une commande de bords de bande (10) qui permet de faire en sorte que deux bords du film (13) soient exactement à la même hauteur avec un pliage en W du film (13) dans l'unité de pliage (5).

10. Dispositif selon la revendication 9, dans lequel, au niveau du pliage en W, deux trous de poinçonnage, avec des sections transversales d'ouverture identiques, sont superposés de manière précise.

11. Dispositif selon l'une des revendications précédentes, dans lequel la station de scellement (4) comprend au moins un outil de scellement et un système d'entraînement (3), plus particulièrement un système d'entraînement à servomoteur, avec lequel l'outil de scellement est déplacé dans la direction d'avance du film avec la vitesse d'avance.

12. Dispositif selon la revendication 11, dans lequel la station de scellement (4) est déplacée pendant un temps et/ou sur un trajet défini de manière synchrone avec le film (13).

13. Dispositif selon la revendication 11 ou 12, qui comprend un capteur de rotation (9) et un capteur de marque d'impression (2), par l'intermédiaire desquels la vitesse d'avance du film et la position d'une impression du film (13) sont mesurées, de façon à ce qu'une position de scellement de la station de scellement (4) puisse être contrôlée en fonction de la position du trou de poinçonnage.
